Europäisches Patentamt

European Patent Office

Office européen des brevets

(19)

(11) Veröffentlichungsnummer: **0 318 057 B1**

(12) # EUROPÄISCHE PATENTSCHRIFT

(45) Veröffentlichungstag der Patentschrift: **10.06.92**

(21) Anmeldenummer: **88120835.9**

(22) Anmeldetag: **07.10.86**

(60) Veröffentlichungsnummer der früheren Anmeldung nach Art. 76 EPÜ: **0 218 237**

(51) Int. Cl.⁵: **E01B 25/24**, B65G 17/20, B65G 21/22

(54) **Förderstreckenprofil für Hängeförderbahnen.**

(30) Priorität: **07.10.85 DE 3535758**

(43) Veröffentlichungstag der Anmeldung:
**31.05.89 Patentblatt 89/22**

(45) Bekanntmachung des Hinweises auf die Patenterteilung:
**10.06.92 Patentblatt 92/24**

(84) Benannte Vertragsstaaten:
**AT CH FR GB IT LI**

(56) Entgegenhaltungen:
**EP-A- 0 139 915      CH-A- 644 914**
**DE-A- 2 510 272      DE-A- 3 401 183**
**DE-B- 1 176 167      DE-B- 1 940 256**

(73) Patentinhaber: **Schönenberger Systemtechnik GmbH**
**Justus-von-Liebig-Strasse 12**
**W-8910 Landsberg/Lech(DE)**

(72) Erfinder: **Hafner, Josef, Dipl.-Ing.**
**Garmischer Strasse 47**
**W-8038 Gröbenzell(DE)**
Erfinder: **Bergmeier, Werner, Dipl.-Ing.**
**Meggendorferstrasse 22**
**W-8000 München 50(DE)**
Erfinder: **Schönenberger, Rolf, Dipl.-Ing., Dipl.-Wirts.-Ing.**
**Herzogstandstrasse 7**
**W-8910 Landsberg/Lech(DE)**

(74) Vertreter: **Patentanwälte Grünecker, Kinkeldey, Stockmair & Partner**
**Maximilianstrasse 58**
**W-8000 München 22(DE)**

EP 0 318 057 B1

## Beschreibung

Die Erfindung betrifft ein Förderstreckenprofil der im Oberbegriff des Patentanspruchs 1 angegebenen Art.

Bei einem aus DE-A-25 10 272 bekannten Förderstreckenprofil ist ein Norm-I-Träger aus Vollmaterial vorgesehen, der die Laufschiene, den Tragsteg und das Tragprofil in sich vereinigt. Das Längengewicht des Förderstreckenprofils ist hoch. Ein Aushängen der Laufrollen ist nur nach deren Demontage vom Bügel möglich.

Ein aus der Praxis bekanntes Förderstreckenprofil enthält als Laufschiene ein Stahl-Winkelprofil mit zwischen den Schenkeln offener Unterseite, das durch den Tragsteg bildende Stegabschnitte mit einem, z.B. aus Rundrohr ausgebildeten, Endlosstrangprofil verschweißt ist. Die Herstellung einer aus Förderstreckenprofilen zusammengesetzten Förderstrecke ist aufwendig, da sie aus Einzelteilen maßgefertigt wird. Nur die Laufschiene kann mit mittenabgehängten Laufrollenpaaren befahren werden. Die offene Unterseite der Laufschiene gestattet zwar das Aushängen des Laufrollenpaares; andererseits bedingt dies zusätzliche Bauteile in Aushängesperrabschnitten der Förderstrecke. Das Gewicht einer Längeneinheit der Förderstrecke ist konstruktionsbedingt hoch. In Verbindungs- oder Stoßbereichen zwischen den Förderstreckenprofilen sind unterschiedliche Verbindungselemente für den Haltesteg und die Laufschiene erforderlich.

Ein ähnliches Förderstreckenprofil ist aus DE-A1-1940256 bekannt. Die Laufschiene ist dort aus Rundrohrabschnitten zusammengesetzt, die mit dem als T-Vollprofil ausgebildeten Tragprofil durch in Abständen angeordnete Schraubbolzen und Spannschlösser verbunden ist. Der Außendurchmesser der Rundrohrabschnitte ist größer als die Aushängespaltweite der Laufrollen. In Aushängebereichen sind entweder Ausnehmungen in der Unterseite des Rundrohrquerschnitts oder eingesetzte Winkelprofilabschnitte vorgesehen, deren offene Seite nach unten weist, so daß die Rollenbügel seitlich herausdrehbar sind. Der Herstellungsaufwand ist wegen der aus Einzelteilen vorzunehmenden Maßanfertigung beträchtlich. Die Belastbarkeit der Förderstrecke variiert stark über ihre Längserstreckung.

Ein aus der EP-A1 01 39 915 bekanntes Förderstreckenprofil besitzt eine untere rechteckige hohle Laufschiene, die als Blechformteil über einen doppelwandigen Tragsteg mit einem größeren rechteckigen hohlen und geschlitzten Tragprofil einstückig verbunden ist. Durchbrechungen im Tragsteg dienen der Befestigung von Hilfselementen. Die Laufrollen sind nicht aushängbar.

Der Erfindung liegt die Aufgabe zugrunde, ein hochbelastbares Förderstreckenprofil der eingangs genannten Art sowie eine montagetechnisch günstige baukastenartige, für verschiedene Hängeförderprinzipien universell einsetzbare Förderstreckenprofilkonzeption zu schaffen.

Die gestellte Aufgabe wird mit den im kennzeichnenden Teil des Patentanspruchs 1 angegebenen Merkmalen gelöst.

Mit dem Wegfall mühsamer Maßanfertigung durch die Einstückigkeit des Förderstreckenprofils ist der zusätzliche Vorteil eines montagetechnisch günstigen Konzepts gegeben. Nicht nur die laufschiene sondern auch das Tragprofil kann von Laufrollen befahren werden. Die Lage des Förderstreckenprofils spielt zunächst beim Einbau in die Förderstrecke keine Rolle. Es ist auch denkbar, den Tragsteg horizontal zu legen und Laufrollen auf den Laufbahnen sowohl des Tragprofils als auch der Laufschiene aufzusetzen. Die Laufstreckenprofile lassen sich leicht miteinander kuppeln und zweckmäßig am Tragsteg abstützen. Mit Anzahl und Größe der Durchbrechungen lassen sich das Längengewicht der Förderstrecke gering halten und die Lage der neutralen Faser genau vorherbestimmen. Die Größe der Durchbrechungen und der auf den Aushängespalt der Laufrollen abgestimmte Abstand des Durchbrechungsrandes von der Laufschiene gestatten es zusammen mit den spiegelbildlichen Profilen, durch Wahl der jeweiligen Einbaulage des Förderstreckenprofils ohne zusätzliche Mittel Aushängebereiche zu schaffen in denen die Rollenpaare ohne Demontage aushängbar sind.

Mit den Merkmalen von Anspruch 2 ergibt sich eine zum Aushängen besonders günstige geringe Laufschienenhöhe, so daß die bis zum Quersteg offene Unterseite der Laufschiene zum Aushängen des Laufrollenpaares nicht ganz genutzt zu werden braucht was das Aushängen vereinfacht. Es kann der Quersteg die freien Schenkelenden sogar unmittelbar miteinander verbinden. Die durch den so niedrig angeordneten Durchbrechungsrand gewonnene Höhe kann dem Querschnitt oder der Breite der Laufschiene zugute kommt.

Gemäß Anspruch 3 lassen sich die Förderstreckenprofile mit der Laufschiene einfach baukastenartig aneinandersetzen und miteinander verbinden. Die Montage gestaltet sich dabei einfach, weil unabhängig von der Einbaulage jedes Förderstreckenprofils zum Abstützen oder Anschließen dieselben Voraussetzungen vorliegen.

Bei der Ausbildung gemäß Anspruch 4 wird trotz der hohen Belastbarkeit eine verhältnismäßig niedrige Schienenhöhe erreicht. Eine unerwünschte Materialanhäufung im Verbindungsbereich der Schenkel wird vermieden. Die Verbindung zwischen dem Steg und dem Tragsteg ist sehr belastbar. Eine Kollision der Laufrollen mit dem Tragsteg wird vermieden, da der Steg einen Abstand zwischen den oberen Enden der Laufbahnen und dem Tragsteg schafft.

Bei der Ausbildung gemäß Anspruch 5 ist es ohne zusätzliche Mittel möglich, durch die Einbaulage des Förderstreckenprofils einen Aushängesperrbereich oder einen Aushängebereich in der Förderstrecke zu schaffen.

Bei der Ausführungsform von Anspruch 6 liegt im Erstreckungsbereich des Förderstreckenprofils von vorneherein ein Aushängesperrbereich vor.

Die Längsnuten gemäß Anspruch 7 beeinträchtigen die Gestaltfestigkeit und Belastbarkeit nicht spürbar; sie gestatten jedoch das Anbringen und Lagesichern von Zusatzeinrichtungen. Dazu kommt, daß sie im Steg eine Elastizität in Hochrichtung erzeugen.

Gemäß den Ansprüchen 8 und 9 werden die im Betrieb auftretenden Belastungen von den Längsnuten über die Befestigungsmittel an die Abstützung der Förderstrecke übertragen. Auch die Kupplung aneinanderstoßender Förderstreckenprofile ist einfach, weil z.B. stiftförmige, Kupplungselemente nur in die Längsnuten eingesteckt zu werden brauchen und dann dafür sorgen, daß sich die Laufschienen bzw. die Förderstreckenprofile nicht mehr relativ zueinander versetzen. Mit in die Längsnuten eingebrachten Halterungen lassen sich die Zusatzeinrichtungen besonders einfach festlegen, ohne daß dazu unbedingt der Tragsteg benutzt werden müßte.

Leichtmetall oder Leichtmetall-Legierungen gemäß Anspruch 10 sind einfach und preiswert mit fast jedem gewünschten Querschnittsprofil und praktisch in unendlichen Längen zu extrudieren, wobei ein solches Strangpreßprofil formgenau, korrosionsunempfindlich, leichtgewichtig, verschleißfest und optisch ansprechend ist. Die spezifisch geringere Belastbarkeit des Materials verglichen mit Stahl wird durch den Querschnitt des Förderstreckenprofils mehr als kompensiert.

Die Ausführungform gemäß Anspruch 11 ist wegen der Gewichtsersparnis gegenüber aus Stahl geschweißten Konstruktionen sowie die vereinfachte Herstellung der Förderstrecke vorteilhaft.

Für leichtere Betriebsbedingungen ist gemäß Anspruch 12 auch Kunststoff brauchbar. Bei Kunststoff kann der Hohlraum, den der Quersteg mit den Schenkeln in der Laufschiene und dem Tragprofil begrenzt, armiert sein oder auch die Schenkel selbst. Kunststoff führt zu leisem Laufgeräusch der Laufrollen. Kurven und Steigungen sind wegen der Elastizität des Materials besonders einfach zu bilden.

Anhand der Zeichnungen werden nachstehend Ausführungsformen der Erfindung erläutert. Es zeigen:

Fig. 1 einen Querschnitt durch eine Laufschiene, eines Förderstreckenprofils,

Fig. 2 eine perspektivische Querschnittsansicht eines Hängeförderstreckenprofils,

Fig 3a,3b Querschnitte zweier abgewandelter Förderstreckenprofile,

Fig 4a,4b die Laufschiene von Fig. 1 im Querschnitt mit Zusatzteilen,

Fig 5a,b,c die Laufschiene von Fig. 1 mit anderen Zusatzteilen,

Fig 6a,6b die Laufschiene von Fig. 1 mit weiteren Zusatzteilen, jeweils im Querschnitt,

Fig 7 einen Querschnitt durch eine Hängeförderstrecke mit einer Zusatzfunktion,

Fig 8 einen Querchnitt durch eine Förderstrecke mit daran befestigten Zusatzteilen,

Fig 9 einen Querschnitt einer Förderstrecke mit Zusatzeinrichtungen,

Fig 10 einen Querschnitt durch eine Schräg-Förderstrecke mit Zusatzeinrichtungen, und

Fig 11a,11b Querschnitt durch eine Behälterförderstrecke mit liegendem Laufstreckenprofil.

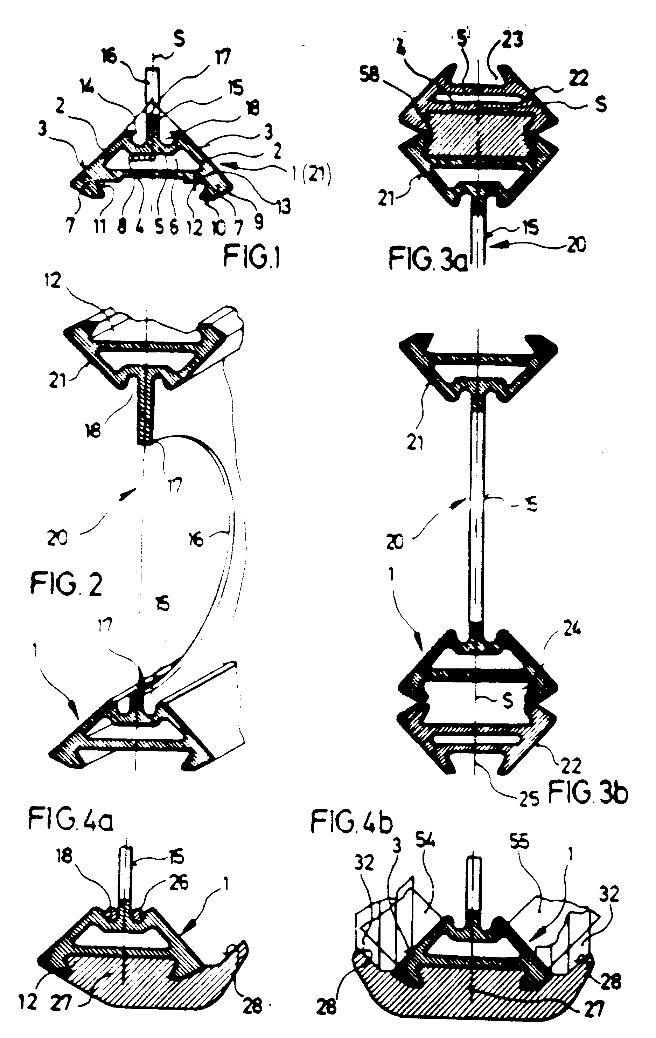

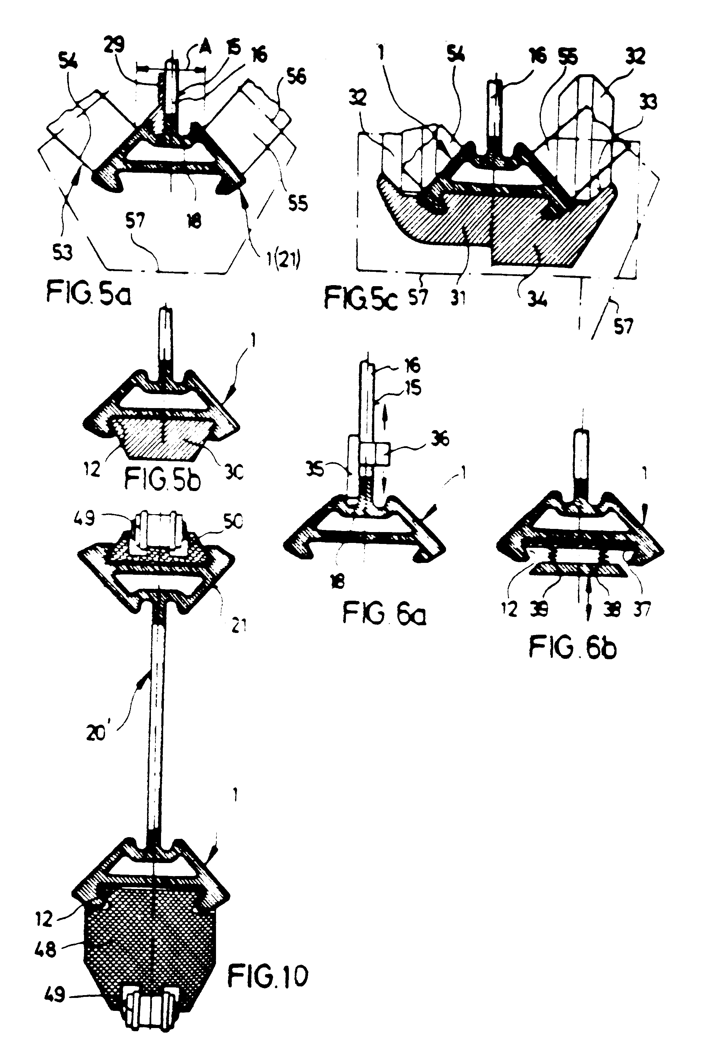

Eine Laufschiene 1 gemäß Fig. 1, beispielsweise ein aus Leichtmetall- oder einer Leichtmetallegierung bestehendes Strangguß- oder -preßprofil, ist gemäß Fig. 2 mit einem Tragsteg 15 und einem zur Laufschiene 1 spiegelbildlichen Tragprofil 21 einstückig in ein Laufstreckenprofil 20 integriert. Die Laufschiene 1 gemäß Fig. 1 besitzt zwei nach oben dachförmig zusammenlaufende Schenkel 2, die außenseitig Laufbahnen 3 für, z.B. in Fig. 5a gezeigte, Laufrollen 54 und 55 eines Laufrollenpaares 53 bilden, die in einem ihre schräg stehenden Achsen 56 miteinander verbindenden Bügel 57 gehalten sind, an dem nicht-dargestellte Transportmittel hängen. Der Bügel 57 hat unterhalb der Laufschiene 1 eine das Ausheben und Anhängen der Laufrollen 54, 55 gestattende Ausnehmung. Die Laufschiene 1 ist seitensymmetrisch bezüglich einer vertikalen Symmetrieebene S. Senkrecht zur Symmetrieebene S verbindet die Schenkel 2 ein Quersteg 4. Die Schenkel 2 enden oben in einem Querabstand zur Symmetrieebene S und werden durch einen Steg 5 miteinander verbunden, der annähernd parallel zum Quersteg 4 verläuft. Der Quersteg 4 begrenzt mit den Innenseite der Schenkel 2 und des Stegs 5 einen Hohlraum 6, in dem gegebenenfalls Längsarmierungen 8, z.B. eingebettet oder eingegossen sind. Der freie Hohlraum 6 ist zum Unterbringen von Versorgungsleitungen oder dgl. nutzbar.

An den freien Enden der Schenkel 2 sind Vorsprünge 7 angeformt, die schräge Führungsflächen 9 sowie zum Quersteg 4 parallele Führungsflächen 10 besitzen. Der Winkel, den die Führungsflächen 9 mit der Symmetrieebene S einschließen beträgt 60°, während der Winkel zwischen den Rollenlaufbahnen 3 und der Symmetrieebene S ca. 45° beträgt. Die Vorsprünge 7 begrenzen mit dem Quersteg 4 eine zur Unterseite der Laufschiene 1 offene Schwalbenschwanznut 12, die durch hinterschnittene Flächen 11 außen begrenzt wird. An der Unterseite des Querstegs 4 können an die Flächen 11 angrenzende Führungsflächen 13 angeformt sein.

Der Steg 5 hat bei dieser Ausführung eine ebene obere Fläche 14 und ist einstückig mit einem Tragsteg 15 vereinigt, der in der Symmetrieebene S nach oben verläuft. Beiderseits des Tragstegs 15 sind hinterschnittene Längsnuten 18 in den Steg 15 eingeformt. Der Tragsteg 15 enthält asymmetrische Durchbrechungen 16, wobei der untere Durchbrechungsrand 17 unterhalb des gedachten Schnittpunktes der Laufbahnen 3 in der Symmetrieebene S liegt.

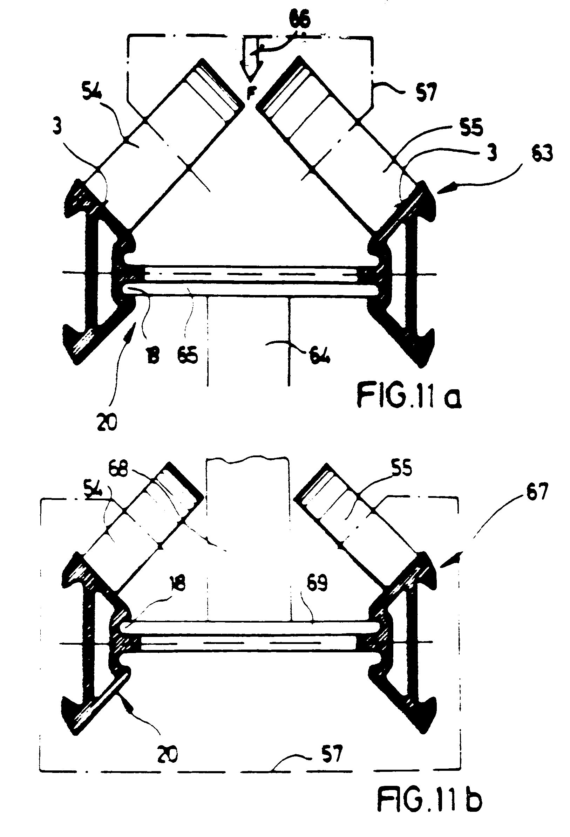

Die Laufschiene 1 ist primär für die in Fig. 1 und 2 dargestellte Betriebslage gedacht, in der der Tragsteg 15 vertikal steht. Bei einer anderen Einbaulage des Laufstreckenprofils 20 (Fig. 2), z.B. in einer Behälterförderstrecke 63, 67 gemäß den Fig. 11 a,b um 90° gedreht, können die Laufrollen 54, 55 des jeweiligen Bügels 57 gleichzeitig auf den Laufbahnen 3 der Laufschiene und des Tragprofils 21 laufen.

Im in Fig. 2 dargestellten Laufstreckenprofil 20, das als Ganzes als Strangpreßprofil einstückig hergestellt ist, liegt das Tragprofil 21 spiegelbildlich zur Laufschiene 1 und hat annähernd denselben Querschnitt wie dieses. Die tatsächliche Lage der neutralen Faser richtet sich u.a. nach der Asymmetrie der Durchbrechungen 16 im Tragsteg 15. Der obere Durchbrechungsrand 17′ jeder Durchbrechung 16 liegt vom Tragprofil 21 weiter entfernt als der untere Durchbrechungsrand 16 von der Laufschiene 1. Die Durchbrechungen 16 können Langlöcher oder auch kreisrund sein. Der Tragsteg 15 geht über die Länge des Laufstreckenprofils 20 durch. Innerhalb ein- und derselben Förderstrecke kann das Laufstreckenprofil entweder mit dem Tragprofil 21 oben oder mit der Laufschiene 1 oben eingesetzt sein, wobei dann das Tragprofil die eigentliche Laufschiene bildet. Die jeweils gewählte Einbaulage hängt u.a. davon ab, ob mit der Asymmetrie der Durchbrechungen 16 ein Aushänge- oder ein Aushängesperrbereich geschaffen werden soll, wie später erläutert wird.

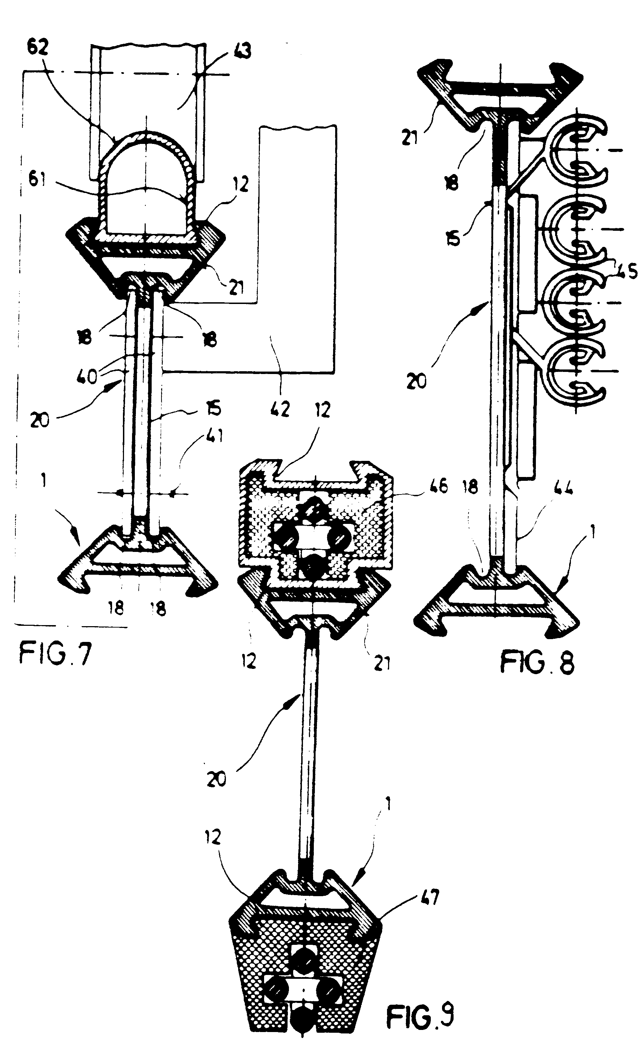

Auf den Laufbahnen 3 der Laufschiene 1 von Fig. 1 könnten Kunststofflaufschichten aufgebracht sein, die dann zweckmäßigerweise in die Längsnuten 18 und die Schwalbenschwanznut 12 formschlüssig eingehängt werden. Das Laufstreckenprofil 20 gemäß Fig. 2 kann durch in die Schwalbenschwanznut 12 des Tragprofils 21 oder in der (anderen Einbaulage) der Laufschiene 1 eingebrachte Haltestücke an einer Abstützung, z.B einem Stützgerüst oder Stützrost befestigt sein, oder auch mit einem die Schenkel des Tragprofils 21 außen umgreifenden Befestigungselement. Zu einer Seitenabhängung können auch Halteelemente 40, 42 (Fig. 7) in die Längsnuten 18 eingreifen.

Bei der Ausführungsform des Laufstreckenprofils 20 gemäß Fig. 3a ist das Tragprofil 21 mit einer Schiene 22 vereinigt, z.B. durch in die Schwalbenschwanznuten 12 eingesteckte Verbindungsstücke 58 oder durch Befestigungsschrauben in der Symmetrieebene S, wodurch die Steifigkeit und Belastbarkeit des Laufstreckenprofils 20 erhöht wird.

Bei der Ausführungsform von Fig. 3b ist die Schiene 22 an der Laufschiene 1 befestigt, z.B. durch Befestigungselemente 25 in der Symmetrieebene, so daß ein Hohlraum 24 freibleibt. Die Schiene 22 stützt sich an den Flächen 10 der Vorsprünge 7 der Laufschiene 1 ab. Der Rollenbügel 57 kann trotz der Schiene 22 benutzt werden.

Die Laufschiene 1 gemäß Fig. 4a hält in der Schwalbenschwanznut 12 ein einflügeliges Laufprofil 27, das mit einer Laufbahn 28 zusammen mit der Laufbahn 3 ein Laufprofil für ein Rollensystem mit hochkant stehender Rolle 32 zeigt. Es kann dies die Rolle 32 eines seitenabgehängten Rollenbügels 57 sein. Wichtig ist, daß hier hintereinander und gleichzeitig die Rollenpaare 53 mit ihren die Laufbahn 28 seitlich berührungslos übergreifenden Rollenbügeln 57 und die Rollen 32 mit ihren seitlich herabhängenden Rollenbügeln 57 benutzt werden können.

In Stoßfugen aneinander stoßender Laufstreckenprofile können (Fig. 4a) in die Längsnuten 18 Kupplungs- oder Zentrierstifte 26 eingesetzt sein.

Bei der Ausführungsform der Fig. 4b ist ein zweiflügeliges Laufprofil 27′ mit zwei Laufbahnen 28 eingesetzt, so daß an beiden Seiten der Laufschiene 1 hochkant stehende Laufrollen 32 mit ihrem Rollenbügel 57 laufen können. Auch hier können gleichzeitig auch die Laufrollenpaare 3 gemäß Fig. 5a benutzt werden. Die Laufprofile 27″, 27 können auch von vornherein einstückig in die Laufschiene 1 integriert sein, falls grundsätzlich der Betrieb mit verschiedenen Rollensystemen gewünscht wird.

Fig. 5a zeigt, wie die Laufrollen 54 und 55 des Laufrollenpaares 53 auf der Laufschiene 1 abgestützt sind. Die mit ihren schräg stehenden Achsen 56 durch den Bügel 57 gehaltenen Laufrollen 54, 55 begrenzen mit ihren Umfängen einen Aushängespalt mit einer Aushängspaltweite A, die so bemessen ist, daß das Laufrollenpaar 53 von der Laufschiene 1 gemäß Fig. 1 und auch gemäß Fig. 5a an sich ausgehängt werden kann, indem das Laufrollenpaar 53 angehoben und dann um ca. 90° gedreht und seitlich abgezogen wird. Zu diesem Zweck ist (Fig. 1) der Abstand zwischen der Unterseite des Querstegs 4 und dem unteren Durchbrechungsrand 17 kleiner als die Aushängespaltweite A. Bei der Ausführungsform von Fig. 5a ist allerdings eine Aushängesperre in Form eines Sperrteiles 29 vorgesehen, der in die Längsnut 18 der Laufschiene 1 eingesteckt und darin festgelegt ist. Er besitzt einen nach oben stehenden Rand, der das Aushängen des Laufrollenpaares 53 verhindert. Zum Aushängen ist unterhalb der Laufschiene 1 im Bügel 57 eine entsprechend geformte Ausnehmung vorgesehen.

Bei der Ausführungsform von Fig. 5b ist eine Aushängesperre in Form eines Klotzes 30 vorgesehen, der in die Schwalbenschwanznut 12 dort eingesetzt ist, wo ein Aushängen des Laufrollenpaares aus sicherheitstechnischen Gründen nicht erwünscht ist. Der Klotz 30 ragt so weit unter die Unterseite der Laufschiene 1, daß das Laufrollenpaar 53 nicht seitlich weggezogen werden kann.

Bei der Ausführungsform von Fig. 5c ist das zusätzliche Laufprofil 27′ von Fig. 4b als Formstück 31 ausgebildet, das einen erhöhten Abschnitt 34 als Aushängesperre auch eines anderen Rollensystems mit vertikal stehenden Rollen 32, bildet, die auf den Laufbahnen 33 und 3 läuft. Der strichpunktiert angedeutete Bügel 57, der an den Laufrollen 32 hängt, läßt sich im Bereich des erhöhten Abschnittes 34 nicht so weit anheben, daß die Laufrollen 32 über die Laufbahnen 33 hinweggehoben werden könnten. Der Abschnitt 34 sperrt auch, wenn nur eine seitenabgehängte Laufrolle 32 vorgesehen ist.

Bei Fig. 6a ist eine willkürlich betätigbare Aushängesperre in Form eines Schiebers 35 mit einem Betätigungsfortsatz 36 am Tragsteg 15 so angebracht, daß sie aus der Längsnut 18 ausgehoben und nach oben verschoben werden kann, bis das Laufrollenpaar 53 ausgehängt worden ist. Sitzt hingegen die Aushängesperre in der Längsnut 18, dann ist in diesem Bereich ein Aushängen durch die Durchbrechung 16 nicht mehr möglich.

Bei der Ausführungsform von Fig. 6b ist ein willkürliches Aushängen des Laufrollenpaares dann möglich, wenn ein Sperrteil 39 gegen die Kraft einer Feder 38 in die Schwalbenschwanznut 12 hineingedrückt wird, wo er mit einer Platte 37 gehalten ist.

Die Aushängesperren der Fig. 5a, 5b, 5c und 6a und 6b können praktisch an beliebiger Stelle der Laufschiene 1 oder des Laufstreckenprofils 20 angebracht sein.

Das Laufstreckenprofil 20 gemäß Fig. 7 ist gleichzeitig zur Benutzung zweier verschiedener Laufrollensysteme geeignet, weil in der Schwalbenschwanznut 12 des Tragprofils 21 ein Längsprofil 61 mit einer oben liegenden, konvex gewölbten Lauffläche 62 festgelegt ist, auf der eine senkrecht stehende Rolle 43 laufen kann, an der an der linken Seite ein strichliert angedeuteter Hängebügel angebracht ist. Das Laufstreckenprofil 20 ist seitenabgehängt, und zwar mittels Befestigungsteilen 40, die beiderseits des Tragsteges 15 in die Längsnuten 18 der Laufschiene 1 und des Tragprofils 21 eingesetzt und darin, z.B. durch Befestigungselemente 41, festgelegt sind. An den plattenförmigen Teilen 40 ist eine seitlich ausgkragende Seitenabhängung 42 angebracht. Bei der Ausführungsform von Fig. 7 können auf der Laufschiene 1 die Rollenpaare 53 gemäß Fig. 4a und gleichzeitig die Laufrollen 43 laufen.

Bei der Ausführungsform von Fig. 8 ist das Laufstreckenprofil 20 mit höherer Tragsteghöhe ausgelegt, wobei an einer Seite des Tragsteges 15 in die Längsnuten 18 der Laufschiene 1 und des Tragprofils 21 eine Halteplatte 44 eingesetzt und festgeschraubt ist, die Aufnahmen 45 für Stromkabel oder dgl. festhält. Es können dies, z.B., auch Schleif- und Kontaktiereinrichtungen für eine elektrisch betriebene Hängeförderbahn sein.

Bei der Ausführungsform von Fig. 9 ist das Laufstreckenprofil 20 für einen Rundgliederkettenförderer bestimmt, wobei in der Schwalbenschwanznut 12 des Tragprofils 21 ein Kettenrücklauf 46 und in der Schwalbenschwanznut 12 der Laufschiene 1 ein Kettenvorlauf 47 befestigt ist.

Fig. 10 zeigt ein Laufstreckenprofil 20′ einer Schrägförderstrecke, bei der in der Schwalbenschwanznut 12 des Tragprofils 21 ein Kettenrücklauf 50 und in der Schwalbenschwanznut 12 der Laufschiene 1 ein Kettenvorlauf 48 angeordnet sind, in denen eine Kette 49 für auf der Laufschiene 1 laufende Laufrollenpaare geführt wird.

Aus den Fig. 11a und 11b ist eine um 90° gegenüber den vorher beschriebenen Betriebslagen gedrehte Betriebslage des Laufstreckenprofils 20 ersichtlich, wobei das Laufstreckenprofil 20 für eine Behältertransportanlage 63 oder 67 benutzt wird. Gemäß Fig. 11a wird das liegende Laufstrecknprofil 20 mit einem in die Nuten 18 eingebrachten und dort festgelegten Halteteil auf einer untenliegenden Abstützung gehalten. Die Laufrollen 54, 55, die im Rollenbügel 57 gehalten sind, laufen auf den obenliegenden, sich V-förmig öffnenden Laufbahnen 3 der Laufschiene und des Tragprofils des Laufstreckenprofils 20. Mit 66 ist die auf dem Rollenbügel 57 ruhende Last angedeutet.

Bei Fig. 11b ist das liegende Laufstreckenprofil 20 über ein Halteteil 69 in den Nuten 18 und eine Mittenaufhängung 68 aufgehängt, zu deren beiden Seiten die Laufrollen 54 und 55 des das Laufstreckenprofil 20 außen nach unten umgreifenden Rollenbügels laufen. Die Last bzw. der nicht dargestellte Behälter hängt am Rollenbügel 57.

Das Laufstreckenprofil kann nicht nur aus

Leichtmetall oder Leichtmetallegierungen stranggepreßt sein, sondern es ist auch eine Blechpreß- und Schweiß- oder eine Kunststoffausbildung, z.B. glasfaserverstärkter Kunststoff, denkbar. Möglich wäre auch eine Verbundkonstruktion aus unter-schiedlichen Materialien. Allen Ausführungsvarian-ten gemeinsam ist ein verhältnismäßig geringes Gewicht pro Längeneinheit, eine hohe Belastbarkeit und eine hohe Torsions- und Biegefestigkeit. Die Materialpaarung mit der jeweils verwendeten Laufrolle läßt sich hinsichtlich Verschleiß und Laufgeräusch einfach optimieren. Bei der geschaffenen Profilkonzeption lassen sich unterschiedliche Anbauteile und Montageelemente leicht anschließen. Das Profil der Laufschiene 1 gestattet die problemlose Ausbildung von Auf- und Abwärtsstrecken, sowie deren Übergänge in horizontale Fahrstrecken und die Ausbildung von Links- oder Rechtskurven. Aushängsperrbereiche lassen sich genauso leicht vorsehen wie Aushängebereiche. Durch Anbringen von Einhängeteilen läßt sich die Förderstrecke beliebig auf Seiten-, Mitten- und Bodenabhängung einstellen, daß die Profilform schon im Hinblick auf eventuelle Zusatzforderungen ausgelegt ist. Auch läßt sich eine Förderstrecke unter Verwendung des Laufstreckenprofils mit Zusatzeinrichtungen oder von vornherein an andere Rollensysteme anpassen, sogar so, daß mehrere Rollensysteme gleichzeitig einsetzbar sind. Auch Behältertransportanlagen mit liegender Anordnung des Laufstreckenprofils, d.h. um 90° gedreht, sind eine mögliche Anwendung. Für Elektrohängebahnen ist das Laufstreckneprofil gut verwendbar, weil am Tragsteg oder am Tragprofil ohne weiteres Schleifleitungen befestigt werden können. Da die Laufschiene 1 unterschiedlich geneigte Flächen besitzt, die ineinander übergehen, besteht die Möglichkeit, Laufrollen- oder Betriebsmittel mit unterschiedlichen Anstellwinkeln oder Laufrollen abwechselnd oder gleichzeitig zu verwenden. Bei angetriebenen Streckenabschnitten können neue Antriebskonzepte in das Profil des Streckenabschnittes integriert werden, z.B. Kettenförderer und dgl. Auch auf dem Tragprofil können Betriebsmittel laufen, wenn die Förderstrecke seiten- oder mittenabgehängt ist. Eine Nachbehandlung oder Oberflächenveredelung ist bei Leichtmetall oder Leichtmetallegierung als Basismaterial entbehrlich. Es kann jedoch eine Eloxierung aus dekorativen Gründen und zur Oberflächenveredelung vorgesehen werden. Genauso ist aber eine individuelle Farbgebung zur Hervorhe-bung unterschiedlich wichtiger Fahrtstreckenab-schnitt möglich.

**Patentansprüche**

1. Förderstreckenprofil (20) für Hängeförderbahnen, insbesondere zum Teiletransport in der Textilindustrie, mit einer Laufschiene (1), die im Querschnitt zwei dachförmig zueinander weisende, oberseitig je eine Rollenlaufbahn (3) für ein Laufrollenpaar (53) tragende Schenkel (2) aufweist, mit einem Tragprofil (21) und mit einem in der profilsymmetrieebene (S) liegenden oberen Tragsteg (15), der mit dem Tragprofil (21) verbunden ist, wobei die Laufrollen (54, 55) des Laufrollenpaars (53) mit schräg zueinander stehenden Achsen (56) in einem gemeinsamen Bügel (57) gehalten sind, wobei das Tragprofil (21) in Querschnitt, Größe und Anordnung der Laufbahnen der Laufschiene im wesentlichen gleich ist, und wobei das endliche Förderstreckenprofil (20) mit zur Lauf-schiene (1) spiegelbildlich angeordnetem Trag-profil (21) einstückig ausgebildet ist, **dadurch gekennzeichnet,** daß im Tragsteg (15) Durchbrechungen (16) in mindestens der Laufrollengröße vorgesehen sind, und daß die Durchbrechungen in einem Aushängebereich einer Förderstrecke mit ihren Rändern so nahe an der Laufschiene (1) liegen, daß die Laufrollen (54, 55) mit ihrem Aushängespalt durch die Durchbrechungen (16) unter Hochheben und Drehen quer zur Laufschiene (1) aushängbar sind.

2. Förderstreckenprofil nach Anspruch 1, **dadurch gekennzeichnet,** daß der Rand (17) einer Durchbrechung (16) unterhalb des gedachten Schnittpunktes der Rollenlaufbahnen (3) liegt.

3. Förderstreckenprofil nach Anspruch 1, **da-durch gekennzeichnet,** daß eine Förderstrek-ke aus mehreren aneinandergesetzten, vor-zugsweise jeweils miteinander verbundenen, Förderstreckenprofilen (20) zusammengesetzt ist.

4. Förderstreckenprofil nach Anspruch 1, **dadurch gekennzeichnet,** daß die Schenkel (2) in einem Querabstand von der Symmetrieebene (S) durch einen quer zur Symmetrieebene (S) liegenden Steg (5) miteinander verbunden sind, und daß der Tragsteg (15) am Steg (5) angeformt ist.

5. Förderstreckenprofil nach den Ansprüchen 1 bis 4, **dadurch gekennzeichnet,** daß die Durchbrechungen (16) im Tragsteg (15) asym-metrisch zur Langsmittelachse des Förder-streckenprofils (20) angeordnet sind.

6. Laufschiene nach den Ansprüchen 1 bis 5, **dadurch gekennzeichnet,** daß zur Schaffung eines Aushängesperrabschnitts innerhalb der Förderstrecke wenigstens ein Förderstreckenprofil (20) um 180° um seine Längsmittelachse gedreht mit dem Tragprofil (21) als Laufschiene und der Laufschiene (1) als Tragprofil angeordnet ist, wobei im derart geschaffenen Aushängesperrabschnitt jeder Durchbrechungsrand (17') von der Unterseite eines die Schenkel (2) unterseitig verbindenden Querstegs (4) des als Laufschiene eingesetzten Tragprofils (21) einen - in Hochrichtung der Profilsymmetrieebene (S) gesehen - Abstand aufweist, der größer ist als die Aushängespaltweite zwischen den Laufrollen (54, 55).

7. Förderstreckenprofil nach den Ansprüchen 1 bis 6, **dadurch gekennzeichnet, daß** im Steg (5) beiderseits des Tragstegs (15) offene, vorzugsweise hinterschnittene, Längsnuten (18) vorgesehen sind.

8. Förderstreckenprofil nach Anspruch 7, **dadurch gekennzeichnet, daß** in den Längsnuten (18) Halterungen (44, 45) für Zusatzeinrichtungen wie Stromversorgungs-oder Steuerkabel festlegbar sind.

9. Förderstreckenprofil nach den Ansprüchen 1 bis 7, **dadurch gekennzeichnet, daß** in die Längsnuten (18) der Laufschiene (1) und des Tragprofils (21) Befestigungsmittel (40) für eine Seitenabhängung, eine Deckenabhängung oder eine Bodenabhängung oder Kupplungsmittel (26) zum Verbinden der Förderstreckenprofile (20) einbringbar sind.

10. Förderstreckenprofil nach den Ansprüchen 1 bis 9, **dadurch gekennzeichnet, daß** es aus Leichtmetall bzw. einer Leichtmetallegierung stranggepreßt ist.

11. Förderstreckenprofil nach den Ansprüchen 1 bis 9, **dadurch gekennzeichnet, daß** es aus Blech gewalzt oder geschweißt oder als Verbundkonstruktion ausgebildet ist.

12. Förderstreckenprofil nach den Ansprüchen 1 bis 9, **dadurch gekennzeichnet, daß** es aus einem glasfaserverstärkten Kunststoff stranggepreßt ist.

**Claims**

1. Conveying route profile (20) for overhead conveyors, in particular for transporting items in the textile industry, having a running rail (1), which has in cross-section two limbs (2) facing towards each other in the shape of roof and each having at the top a roller path (3) for a pair (53) of running rollers, having a bearing profile (21) and having an upper bearing web (15) which is located in the plane of profile symmetry (S) and is connected to the bearing profile (21), the running rollers (54, 55) of the pair (53) of running rollers being held in a common yoke (57) with axles (56) aligned obliquely relative to each other, the bearing profile (21) being essentially identical to the running rail in cross-section, size and arrangement of the paths, and the finite conveying route profile (20) being constructed integrally with the bearing profile (21) arranged in mirror image relative to the running rail (1), characterised in that openings (16) at least of the size of the running rollers are provided in the bearing web (15), and in that the openings are located in an removing region of a conveying route with their edges so close to the running rail (1) that the running rollers (54, 55) can be removed with their removing gap passing through the openings (16) while they are lifted up and rotated transversely to the running rail (1).

2. Conveying route profile according to Claim 1, characterised in that the edge (17) of an opening (16) is located below the imagined intersection of the roller paths (3).

3. Conveying route profile according to Claim 1, characterised in that one conveying route is composed of a plurality of abutting conveying route profiles (20) which are preferably connected to one another in each case.

4. Conveying route profile according to Claim 1, characterised in that the limbs (2) are connected to each other by a web (5), located transversely relative to the plane of symmetry (S), with a transverse spacing from the plane of symmetry (S), add in that the bearing web (15) is moulded onto the web (5).

5. Conveying route profile according to Claims 1 to 4, characterised in that the openings (16) are arranged in the bearing web (15) asymmetrically relative to the longitudinal mid-axis of the conveying route profile (20).

6. Running rail according to Claims 1 to 5, characterised in that, to provide an removing blocking portion within the conveying route, at least one conveying route profile (20) is arranged, rotated by 180° about its longitudinal mid-axis, with the bearing profile (21) as running rail and the running rail (1) as bearing profile, each opening edge (17') in the remove-blocking portion provided in this manner having a spacing - seen in the vertical direction of the plane of profile symmetry (S) - from the underside of a transverse web (4), connecting the limbs (2) on the underside, of the bearing profile (21) used as running rail, which spacing is larger then the width of the removing gap between the running rollers (54, 55).

7. Conveying route profile according to Claims 1 to 6, characterised in that open, preferably undercut, longitudinal grooves (18) are provided in the web (5) on both sides of the bearing web (15).

8. Conveying route profile according to Claim 7, characterised in that holders (44, 45) for additional devices, such as power supply or control cables, can be fixed in the longitudinal grooves (18).

9. Conveying route profile according to Claims 1 to 7, characterised in that attachment means (40) for a lateral suspension, a top suspension or a bottom suspension or coupling means (26) for connecting the conveying route profiles (20) can be introduced into the longitudinal grooves (18) of the running rail (1) and of the bearing profile (21).

10. Conveying route profile according to Claims 1 to 9, characterised in that it is extruded from light metal or a light metal alloy.

11. Conveying route profile according to Claims 1 to 9, characterised in that it is rolled or welded from sheet metal or designed as a composite construction.

12. Conveying route profile according to Claims 1 to 9, characterised in that it is extruded from a glass fibre reinforced plastic.

## Revendications

1. Profilé pour voies de transport suspendues (20), en particulier pour le transport de pièces dans l'industrie textile, comprenant un rail de roulement (1) avec, en coupe transversale, deux branches (2) dirigées l'une vers l'autre en forme de toit et munies chacune à la surface supérieure d'une voie de roulement (3) pour une paire de galets (53), un profilé porteur (21) et une barrette porteuse supérieure (15) située dans le plan de symétrie (S) et raccordée au profilé porteur (21), les galets de roulement (54, 55) de la paire de galets (53) étant maintenus avec leurs axes (56) inclinés l'un vers l'autre dans un étrier (57) commun, le profilé porteur (21) étant sensiblement identique au rail de roulement en ce qui concerne la section transversale, la dimension et l'agencement des voies de roulement, et le profilé fini (20) pour voies de transport étant réalisé en une seule pièce avec le profilé porteur (21) disposé en image de miroir par rapport au rail de roulement (1), **caractérisé en ce** que dans la barrette porteuse (15) sont prévus des ajours (16) dont les dimensions sont au moins égales à celles des galets de roulement, et que les ajours dans une zone de décrochage d'une voie de transport sont situés avec leurs bords tellement près du rail de roulement (1) que les galets (54, 55) avec leur fente de décrochage peuvent être décrochés au travers des ajours (16) en les soulevant et en les tournant transversalement au rail de roulement (1).

2. Profilé pour voies de transport selon la revendication 1, caractérisé en ce que le bord (17) d'un ajour (16) se situe en dessous de l'intersection imaginaire des voies de roulements (3) des galets.

3. Profilé pour voies de transport selon la revendication 1, caractérisé en ce qu une voie de transport est assemblée à partir de plusieurs profilés (20) pour voies de transport juxtaposés, de préférence raccordés respectivement les uns aux autres.

4. Profilé pour voies de transport selon la revendication 1, caractérisé en ce que les branches (2) sont reliées entre elles à une distance transversale du plan de symétrie (S) par une barrette (5) orientée transversalement par rapport au plan de symétrie (S), et que la barrette porteuse (15) est conformée sur la barrette (5).

5. Profilé pour voies de transport selon l'une des revendications 1 à 4, caractérisé en ce que les ajours (16) sont disposés dans la barrette porteuse (15), de manière asymétrique par rapport à l'axe longitudinal médian du profilé pour voies de transport (20).

6. Rail de roulement selon l'une des revendications 1 à 5, caractérisé en ce que, pour la création d'une section d'interdiction de décrochage à l'intérieur de la voie de transport, au moins un profilé pour voies de transport (20) est disposé avec une rotation de 180° autour de son axe longitudinal médian, avec le profilé porteur (21) comme rail de roulement et le rail de roulement (1) comme profilé porteur, dans la section d'interdiction de décrochage ainsi créée, chaque bord d'ajour (17') présentant, par rapport à la face inférieure d'une barrette transversale (4) du profilé porteur (21) utilisé comme rail de roulement et reliant les branches (2) du côté inférieur, une distance - vu dans le sens vertical du plan de symétrie (S) du profilé - qui est plus grande que la largeur de la fente de décrochage entre les galets (54, 55).

7. Profilé pour voies de transport selon l'une des revendications 1 à 6, caractérisé en ce que dans la barrette (5), de part et d'autre de la barrette porteuse (15), sont prévues des rainures longitudinales (18) ouvertes, de préférence contre-dépouillées.

8. Profilé pour voies de transport selon la revendication 7, caractérisé en ce que des fixations (44, 45) pour des dispositifs additionnels tels que des câbles d'alimentation en courant électrique ou des câbles de commande peuvent être bloquées dans Tes rainures longitudinales (18).

9. Profilé pour voies de transport selon l'une des revendications 1 à 7, caractérisé en ce que dans les rainures longitudinales (18) du rail de roulement (1) et du profilé porteur (21) peuvent être placés des moyens de fixation (40) pour une suspension latérale, une suspension au plafond ou une suspension au sol ou des moyens d'accouplement (26) pour le raccordement des profilés pour voies de transport (20).

10. Profilé pour voies de transport selon l'une des revendications 1 à 9, caractérisé en ce qu'il est filé en métal léger et respectivement en un alliage léger.

11. Profilé pour voies de transport selon l'une des revendications 1 à 9, caractérisé en ce qu'il est laminé en tôle ou soudé ou réalisé sous forme de construction mixte.

12. Profilé pour voies de transport selon l'une des revendications 1 à 9, caractérisé en ce qu'il extrudé à partir d'une matière plastique armée aux fibres de verre.

FIG.1

FIG. 2

FIG. 3a

FIG. 3b

FIG. 4a

FIG. 4b

FIG.5a

FIG.5c

FIG.5b

FIG.6a

FIG.6b

FIG.10

FIG.7

FIG. 8

FIG.9

FIG.11 a

FIG.11 b